**Europäisches Patentamt**

**European Patent Office**

**Office européen des brevets**

(19)

(11) Veröffentlichungsnummer: **0 090 458**
**B1**

(12) **EUROPÄISCHE PATENTSCHRIFT**

(45) Veröffentlichungstag der Patentschrift:
**27.03.85**

(51) Int. Cl.⁴: **G 11 B 17/02**

(21) Anmeldenummer: **83200395.8**

(22) Anmeldetag: **23.03.83**

(54) **Plattenspieler für eine starre Informationsträgerplatte.**

(30) Priorität: **27.03.82 DE 3211360**
**27.03.82 DE 3211359**

(43) Veröffentlichungstag der Anmeldung:
**05.10.83 Patentblatt 83/40**

(45) Bekanntmachung des Hinweises auf die Patenterteilung:
**27.03.85 Patentblatt 85/13**

(84) Benannte Vertragsstaaten:
**DE FR GB IT**

(56) Entgegenhaltungen:
**DE - A - 2 709 261**
**FR - A - 2 428 296**
**US - A - 3 898 814**
**US - A - 3 968 972**
**US - A - 4 092 671**

**IBM TECHNICAL DISCLOSURE BULLETIN; Band 22, Nr. 1, Juni 1979, Seiten 293-295, New York, USA K.D. RUSCH et al.: "Flexible disk drive having precise centering mechanism"**

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL-5621 BA Eindhoven (NL)**
(84) Benannte Vertragsstaaten: **FR GB IT**

(72) Erfinder: **Elsemann, Kurt, Moltkestrasse 36, D-1000 Berlin 45 (DE)**

(74) Vertreter: **Kupfermann, Fritz-Joachim et al, Philips Patentverwaltung GmbH Billstrasse 80 Postfach 10 51 49, D-2000 Hamburg 28 (DE)**

## Beschreibung

Die Erfindung bezieht sich auf einen Plattenspieler für eine starre Informationsträgerplatte mit einer Plattenhalterung, worauf während der Informationsübertragung die Informationsträgerplatte umläuft, wobei die Plattenhalterung einen Auflageteller und eine Zentriervorrichtung umfaßt, die eine Anzahl in einem Kreis angeordneter Zentrierelemente umfaßt, die in radialer Richtung federnd ausgebildet sind, damit die Platte beim Drehen durch die gegen die Wand des Mittenloches in der Platte federnden Zentrierelemente zentriert gehalten wird, wobei der Plattenspieler einen zwischen einer gaöffneten und einer geschlossenen Lage beweglichen Deckel aufweist, der einen Plattenandrücker trägt, und wobei die Platte beim Bewegen des Deckels in die geschlossene Lage mittels des Plattenandrückers federnd auf die Zentriervorrichtung und den Auflageteller gedrückt wird.

Eine derartige Plattenfestklemmung bei einem Plattenspieler für eine Informationsträgerplatte ist aus der US-A-4 218 065 bekannt. Der Plattenandrücker des bekannten Plattenspielers ist mit einem Magnetring versehen, der mittels einer Feder am Deckel des Gerätes angeordnet ist. Beim Schließen des Deckels setzt sich dieser dauermagnetische Ring unter dem Andruck der Feder und der magnetischen Anziehungskraft zum Auflageteller auf die Platte auf. Während des ganzen Spielvorganges ruht der Magnetring des Plattenandrückers auf der Platte und hält diese dabei fest. Voraussetzung dazu ist natürlich, daß der Plattenandrücker im Gerätedeckel drehbar gelagert ist. Dies erfordert einen besonderen Aufwand und außerdem bildet dies eine Belastung für das Drehen des Auflagetellers.

Die Erfindung hat nun zur Aufgabe, einen Plattenspieler für eine starre Informationsträgerplatte zu schaffen, wobei die Informationsträgerplatte auf den Auflageteller gedrückt und dennoch im Betrieb die Drehung des Auflagetellers nicht behindert bzw. belastet wird.

Dies wird nach der Erfindung dadurch erzielt, daß der Deckel in zwei Stufen aus der geöffneten in die geschlossene Lage bewegbar ist, wobei der Deckel mit Hebemitteln gekuppelt ist, die, nachdem in einer ersten Stufe, der Andrückstufe des Deckels der Plattenandrücker die Platte federnd auf die Zentriervorrichtung und auf den Auflageteller gedrückt hat, in einer zweiten Stufe, der Hebestufe, den Deckel wieder anheben bis sich der Plattenandrücker wieder von der auf der Zentriervorrichtung festgeklemmten Informationsträgerplatte abgehoben hat, wobei die nach außen federnden Zentrierelemente durch eine radiale Federung die Platte auf dem Auflageteller zentriert halten.

Wenn der Deckel des Plattenspielers nach dem Andrücken der Informationsträgerplatte wieder abhebt, verschwindet die Berührung zwischen dem Plattenandrücker und der Platte und damit eine evtl. Störung der Drehbewegung des Auflagetellers. Die Ausfederung der federnden Zentrierelemente reicht aus, um die Platte fest auf dem Auflageteller zu sichern.

Nach einer weiteren Ausgestaltung eines erfindungsgemäßen Plattenspielers ist vorgesehen, daß der Plattenandrücker ringförmig ausgebildet ist und innerhalb des Plattenandrückers ein Andrückstück vorhanden ist, das unabhängig federnd an dem Deckel angeordnet ist, das im Betrieb auf die Zentriervorrichtung drückt und die Zentrierelemente in radialer Richtung nach außen gegen die Wand des Mittenloches in der Platte drückt.

Eine derartige Konstruktion ist insbesondere für vertikal aufgestellte Plattenspieler geeignet. Durch das Ausspreizen der federnden Zentrierelemente mit Hilfe des Spreizgliedes wird der Kontakt zwischen den federnden Zentrierelementen und dem Rand des Mittenloches der Platte wesentlich erhöht.

Nach einer weiteren Ausgestaltung eines Plattenspielers nach der Erfindung ist vorgesehen, daß die inneren Schenkel des Zentrierelementes in eine Zentrierhülse übergehen, die über einen Innenbund des Auflagetellers geschoben ist, daß die U-förmigen Bügel über einen Außenbund des Auflagetellers geschoben sind, der auf seiner Außenwand einen Ringvorsprung aufweist, daß die Zentriervorrichtung auf den Außenbund und den ringförmigen Vorsprung gegen eine Federkraft aufschiebbar ist, daß beim Aufschieben der Zentriervorrichtung auf den Außenbund die äußeren Schenkel des Zentrierelementes vom Ringvorsprung radial nach außen gespreizt werden.

Durch dieses Ausspreizen über den Ringvorsprung können die Zentrierelemente einwandfrei gegen die Wand des Mittenloches bewegt werden, wodurch das Festklemmen weiter verbessert wird.

In unserer am 23. 3. 1983 eingereichten Anmeldung EP-A-90 459 wird ein Plattenspieler beansprucht, bei dem der Schließvorgang des Deckels in zwei Bewegungsphasen abläuft und unerwünschtes Niederdrücken durch eine Verriegelung verhindert wird.

Ausführungsbeispiele der vorliegenden Erfindung sind in der Zeichnung dargestellt und werden im folgenden näher beschrieben. Es zeigt

Fig. 1 einen Schnitt durch einen Teil eines Plattenspielers nach der Erfindung bei angehobenem Deckel,

Fig. 2 den Teil des Plattenspielers nach Fig. 1 nach dem Auflegen und Andrücken einer Informationsträgerplatte auf den Auflageteller, wobei der Deckel wieder von der Informationsträgerplatte abgehoben ist,

Fig. 3 bis 5 einen Schnitt in verringertem Maßstab durch einen Teil des Plattenspielers nach Fig. 1, wobei drei Phasen des Schließvorganges des Deckels dargestellt sind,

Fig. 6 und 7 einen Schnitt durch eine Abwandlung des Plattenspielers nach Fig. 1.

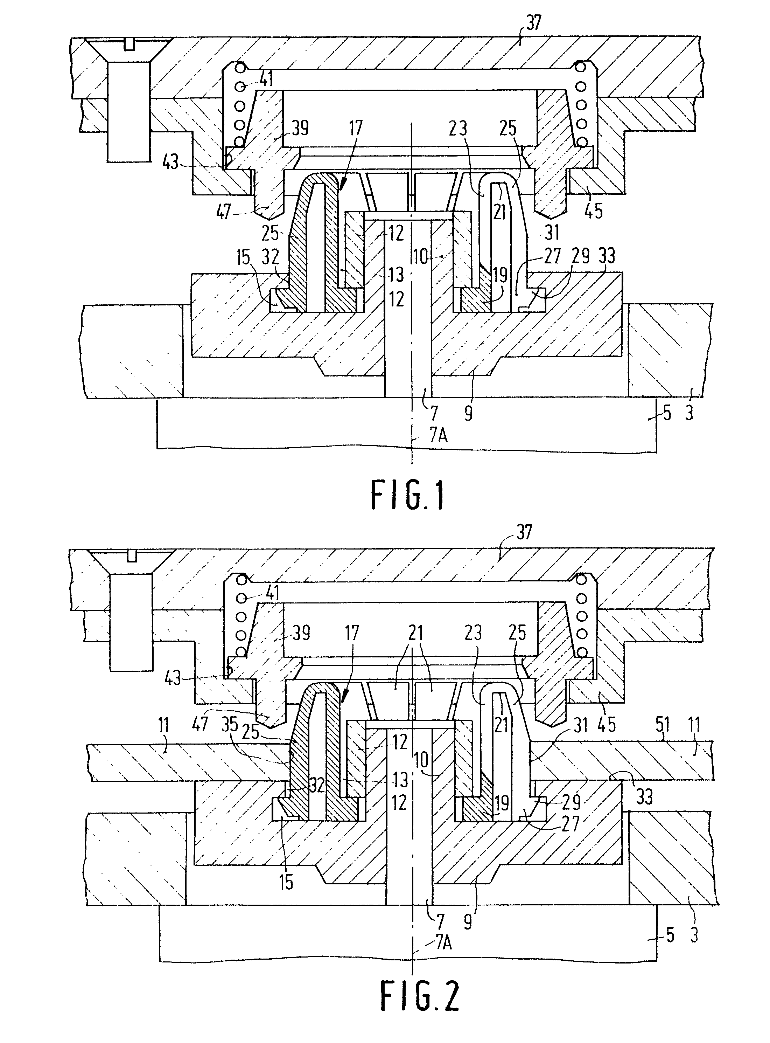

Das Chassis eines in Fig. 1 dargestellten Plat tenspielers 3 trägt einen Antriebsmotor 5. Auf einer aus dem Motor 5 herausgeführten Antriebswelle 7 ist ein Auflageteller 9 für eine starre Informationsträgerplatte 11 (siehe Fig. 2) angeordnet. In der Mitte des Auflagetellers 9 befindet sich eine Hülse 10, auf die eine Sicherungshülse 12 aufpreßbar ist. Rings um die Hülse 10 erstreckt sich eine ringförmige Vertiefung 13 in dem Auflageteller 9, die sich mit einer nach außen geführten Rille 15 in radialer Richtung hinterschnitten bis in den Auflageteller 9 erstreckt.

Eine in den Auflageteller 9 einsetzbare Zentriervorrichtung 17 besteht aus einem Fußring 19, mit dem federnde Zentrierelemente verbunden sind in Form von in einem Kreis angeordneten, aufrechtstehenden, U-förmigen Kunststoffbügeln 21. Von den Bügeln 21 sind die inneren Schenkel 23 an ihren freien Enden mit dem Fußring 19 verbunden, während die freien Enden 27 der äußeren Schenkel 25 in radialer Richtung frei nach außen federn können. Die freien Enden 27 der äußeren Schenkel 25 greifen mit Ansätzen 29 in die Rille 15 des Auflagetellers 9. Vorzugsweise sind die Bügel 21 mit dem Fußring 19 aus nur einem Kunststoffteil gebildet.

Es ist wichtig, daß die Zentriervorrichtung 17 eine auf den Auflageteller 9 aufgelegte Informationsträgerplatte 11 genau konzentrisch zur Drehachse 7A der Welle 7 ausrichtet. Dazu ist vorgesehen, daß die Zentriervorrichtung 17 bei abgenommener Sicherungshülse 12 auf den Auflageteller 9 aufgesetzt wird. Die Ansätze 29 greifen dabei in die Rille 15. Die Außenwände 31 der äußeren Schenkel 25 drücken federnd gegen eine genau konzentrisch um die Drehachse 7A liegende Innenringwand 32 der Vertiefung 13. Dies bewirkt, daß sich der Fußring 19 bei sich ausgleichenden Federkräften der einzelnen Zentrierelemente 21 in eine Mittelstellung schiebt, die zu der Drehachse 7A nicht genau zentrisch zu sein braucht, die jedoch dem federausgeglichenen Zentrum der Zentriervorrichtung 17 entspricht. Nach dieser zwangsläufig erfolgten Einstellung der Mittelstellung des Fußringes 19 wird die Sicherungshülse 12 auf die Hülse 10 gepreßt; die Sicherungshülse klemmt dadurch den Fußring 19 fest. Die Zentriervorrichtung 17 ist mithin ohne Verwendung spezifischer Hilfsmittel in ihrem federausgeglichenen Zentrum festgelegt.

Wenn die Informationsträgerplatte 11, wie sich aus Fig. 2 ergibt, auf die Auflagefläche 33 des Auflagetellers 9 aufgedrückt wird, genügt die Federwirkung der U-förmigen Bügel 21, die mit ihren äußeren Schenkeln 25 gegen die Wand 35 des Mittenloches der Informationsträgerplatte 11 drücken, um die Informationsträgerplatte unverrückbar fest und zentrisch am Auflageteller 9 zu halten. Auf diese Weise bilden der Auflageteller 9 und die Zentriervorrichtung 17 zusammen eine Plattenhalterung für die Informationsträgerplatte 11. In einem Deckel 37 des Plattenspielers ist axial verschieblich ein Plattenandrücker 39 angeordnet. Eine Schraubenfeder 41 drückt gegen einen Kragen 43 des Plattenandrückers 39, der damit bis zu einem Anschlag 45 auf dem Dek-

kel 37 in Richtung auf den Auflageteller 9 gedrückt wird. Der Plattenandrücker 39 ist mit einem sich in Richtung des Auflagetellers 9 erstreckenden Ring 47 versehen.

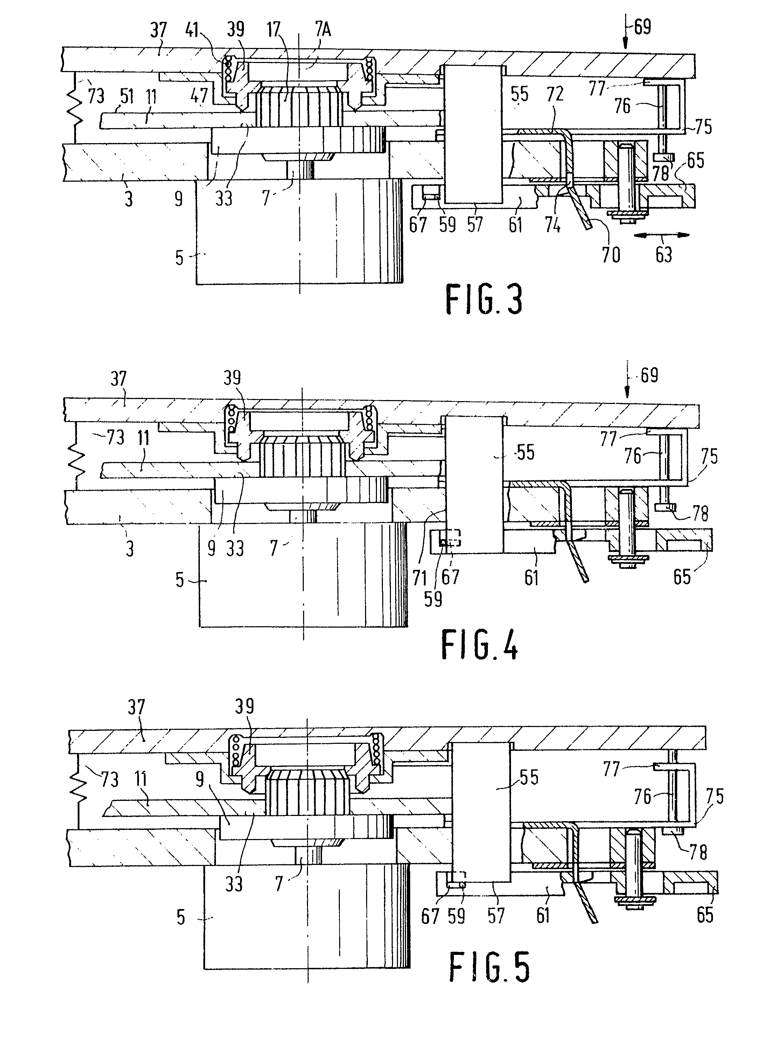

Weiterhin hat der Deckel 37, wie in Fig. 3 dargestellt, mindestens einen Andrückbügel 55, der in Richtung des Chassis aus dem Deckel 37 herausragt. Die untere Seite 57 des Bügels 55 ist als Anschlagkante ausgebildet. Diese arbeitet mit einer Drahtfeder 59 zusammen.

An der Chassisplatte 3 ist ein Schieber 61 in Richtung eines Doppelpfeiles 63 verschiebbar gelagert. Der Schieber 61 ist auf der Vorderseite mit einem Druckknopf 65 versehen, mit dem es möglich ist, den Schieber 65 von außen her zu betätigen und in den Plattenspieler zu drücken. In einem länglichen Schlitz 67 des Schiebers 61 befindet sich die Drahtfeder 59. Durch die Vorspannung wird diese Drahtfeder in dem Langloch 67, wie in Fig. 3 ersichtlich, in Richtung des Bügels 55 verschoben liegen.

Wird nun der Deckel 37 im Rahmen der ersten Andrückstufe eines Schließvorganges in Richtung des Pfeiles 69 niedergedrückt, so drückt der Plattenandrücker 39 mittels des Ringes 47 die Informationsträgerplatte 11 fest auf die Zentriervorrichtung 17 mit den U-förmigen Bügeln 21 und auf den Auflageteller 9. Die Wand 35 des Mittenloches der Informationsträgerplatte 11 drückt die äußeren Schenkel 25 der U-förmigen Bügel 21 in radialer Richtung entgegen der Vorspannung der U-förmigen Bügel nach innen. Dadurch tritt zwischen der Wand 35 des Loches der Informationsträgerplatte 11 und den Außenwänden 31 der Schenkel 25 ein Kontaktdruck auf, der ausreicht, die Informationsträgerplatte 11 auf dem Auflageteller 9 festzuhalten. Durch die Art und Weise der Ausgestaltung der Bügel 21 ist der Kontaktdruck dabei derart, daß die Platte zentrisch geklemmt liegt.

Der Andrückbügel 55 gelangt in die aus Fig. 3 zu sehende Stellung gegenüber der Drahtfeder 39. Dies bedeutet, daß die Anschlagkante 57 in der Eindrückrichtung tiefer liegt als die Drahtfeder 59. Dies hat vorausgesetzt, daß der Schieber 61 durch Eindrücken in die aus Fig. 3 ersichtliche Stellung gebracht wurde, und zwar mittels einer Schräge 70 an einem mit dem Deckel 37 gekuppelten Verriegelungsblech 72, die während der ersten Anpreßstufe den Schieber 61 nach hinten geschoben hat. Die Platte 72 weist einen Befestigungsteil 75 auf, der mit Hilfe von Stiften 76, die sich senkrecht zu dem Deckel 37 erstrecken, mit dem Deckel gekuppelt ist; dadurch kann der Deckel 37 gegenüber dem Blech 72 eine geringfügige Bewegung durchführen. Während der ersten Bewegungsstufe drückt ein Anschlag 77 des Befestigungsteiles 75 gegen den Deckel 37, wodurch das Blech 72 der Abwärtsbewegung des Deckels folgt.

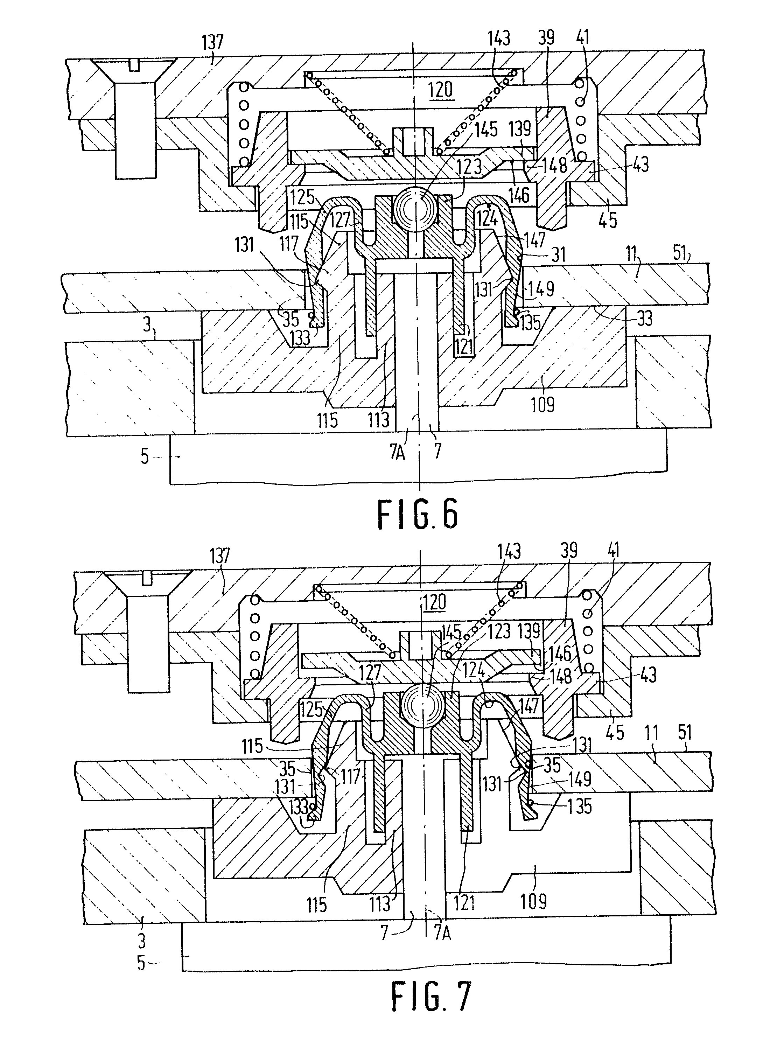

Gelangt der Schieber 61 nun in den Bereich einer Ausnehmung 74 des Verriegelungsbleches 72, so wird dieser Schieber unter Federkraft einer nicht dargestellten Feder auswärts geschoben, und die Drahtfeder 59 legt sich an eine Seitenkante 71 des Druckwinkels 55 an. Dies erfolgt immer bei noch bleibend nach unten gerichtetem Andruck des Deckels in Richtung des Pfeiles 69, beispielsweise mit Druck der Hand auf den Deckel, wobei der Anschlag 77 noch immer gegen den Deckel 37 drückt. Wird nun in einer zweiten Bewegungsstufe des Schließvorganges der Druck in Richtung des Pfeiles 69 beendet, so drücken Hebemittel, die durch eine auf schematische Weise dargestellte Druckfeder 73 gebildet sind, den Deckel 37 nach oben bzw. von der Informationsträgerplatte 11 weg. Der Plattenandrücker 39 hebt sich mit dem Ring 47 von der Oberfläche 51 der Informationsträgerplatte 11 ab. Die Informationsträgerplatte 11 ist nun, wie in Fig. 2 dargestellt, nur noch mittels der Zentriervorrichtung 17 an dem Auflageteller festgelegt. Mit dem Anheben des Plattenandrückers 39 wird auch der Andrückbügel 55 nach oben gehoben, und die Drahtfeder 59, die nach Fig. 4 im Langloch 67 nach links verschoben wurde, wird frei und kann in die Stellung nach Fig. 3 zurückfallen. In dieser dritten Bewegungsstufe des Schließvorganges, die dadurch begrenzt wird, daß Anschläge 78 auf den Stiften 76 gegen den Befestigungsteil 75 stoßen, liegt die Drahtfeder 59 bei Fig. 5 unter der Anschlagkante 57. Dadurch ist es also nicht möglich, den Deckel 37 noch einmal niederzudrücken, weil er mittels der Drahtfeder 59 daran gehindert wird. Damit ist die dritte Bewegungsstufe des Schließvorganges beendet. Beim nun folgenden Abspielen bleibt durch die Wirkung der Zentriervorrichtung 17 die Zentrierung der Platte ständig beibehalten Außerdem vermeidet die Zentriervorrichtung 17, daß die Platte sich von dem Auflageteller 9 löst.

Ein erneutes Eindrücken der Taste 65 ermöglicht es nun, daß der Deckel in die Lage nach Fig. 3 zurückgebracht wird.

Fig. 6 und 7 zeigen eine Abwandlung der Ausführungsform des Plattenspielers 3 nach Fig. 1 mit einem Antriebsmotor 5 und mit einer Antriebswelle 7, wobei ein Auflageteller 109 für eine starre Informationsträgerplatte 11 vorhanden, die Zentriervorrichtung beim Öffnen des Deckels 137 entspannt ist und die Informationsplatte 11 von dem Auflageteller 109 entfernt werden kann. An dem Auflageteller 109 sind bei diesem Ausführungsbeispiel eine innere Hülse 113 und eine äußere Hülse 115 vorgesehen. Die äußere Hülse 115 trägt einen nach außen liegenden ringförmigen Vorsprung 117. Auf die beiden Hülsen 113 und 115 kann eine Zentriervorrichtung 120 aufgeschoben werden. Diese Zentriervorrichtung 120 besteht aus elastischem Kunststoff und umfaßt eine Zentrierhülse 121. Diese Zentrierhülse 121 greift gleitend über die innere Hülse 113 des Auflagetellers 109. Rings um einen Zentralkörper 123 der Zentriervorrichtung 120 sind aufrechtstehende, U-förmige Klemmbügel 124 angeordnet, die sich radial nach außen erstrecken. Die inneren Schenkel 127 der Klemmbügel 124 sind mit dem Zentralkörper 123 verbunden, und die äußeren Schenkel 125 enden frei an der Außenseite der äußeren Hülse 115.

Der Ringvorsprung 117 der äußeren Hülse 115 greift in Einkerbungen 131 an den Innenseiten der äußeren Klemmbügelschenkel 125. Von außen ist um die freien Enden 133 der äußeren Klemmbügelschenkel 125 ein Einschließring 135 gelegt, der die freien Enden 133 nach innen zieht.

Am Deckel 137 ist, wie in dem vorhergehenden Ausführungsbeispiel, ein Plattenandrücker 39 vorhanden, der mittels einer Schraubenfeder 41, die auf einen Kragen 43 des Plattenandrückers drückt, gegen einen Anschlag 45 gedrückt liegt. Innerhalb des Plattenandrückers 39 ist gegenüber diesem unabhängig beweglich ein Andrückstück 139 angeordnet. Das Andrückstück 139 ist ebenso wie der Plattenandrücker 39 in Richtung der Achse 7A axial verschieblich. Das Andrückstück wird mittels einer kegelförmigen Schraubenfederung 143 in Richtung des Auflagetellers 109 gedrückt. Das Andrückstück 139 weist nahezu einen Punktkontakt mit der Oberfläche einer Kugel 145 auf. Diese Kugel 145 ist zentral in den Zentralkörper 123 aufgenommen und liegt wenigstens teilweise in axialer Richtung außerhalb des Zentralkörpers 123.

Beim Beginn des Auflegevorganges der Platte auf den Auflageteller nach Fig. 6 hat die Zentriervorrichtung 120 wegen des Einschließringes 135 am Umfang der Schenkel 125 einen derartigen Durchmesser, daß die Informationsträgerplatte 11 unbehindert auf den Auflageteller 109 gelegt werden kann. Der Außenrand 146 des Andrückstückes 139 liegt dabei auf einem Ringvorsprung 148 des Plattenandrückers 139. Die Kugel 145 wird dabei von dem Andrückstück 139 noch nicht berührt. Beim nun beginnenden Schließvorgang des Deckels 137 wird die Informationsträgerplatte 11 vom Plattenandrücker 39 sicherheitshalber auf die Oberfläche 33 des Auflagetellers 109 aufgedrückt. Zugleich hat das Andrückstück 139 den Zentralteil 123 der Zentriervorrichtung 120 in Richtung des Auflagetellers 109 geschoben. Dabei hat die Kugel 145 die äußeren Klemmbügel schenkel 125 über eine schräg gerichtete Auflauffläche 147 der äußeren Hülse 115 geschoben und unter einer radialen Ausweichbewegung nach außen bewegt (Fig. 7). Dadurch haben sich die äußeren Kanten 149 der äußeren Schenkel 125 fest an die Wand 35 des Mittenloches der Informationsträgerplatte 11 gedrückt. Die Platte liegt dadurch außerordentlich sicher auf dem Auflageteller 109 und kann auch in vertikaler Stellung ohne Schwierigkeiten abgespielt werden. Der verbleibende Hub wird durch die Feder 143 des Andrückstückes 139 ausgeglichen. Damit ist ein Ausgleich für große Toleranzen in dem Durchmesser des Mittenloches und der Dicke der Informationsträgerplatte erzielt.

In der zweiten Bewegungsstufe des Schließvorganges wird der Druck auf den Deckel 137 beendet und wird auf eine Art und Weise wie bei dem vorhergehenden Ausführungsbeispiel beschrieben, der Deckel 137 wieder etwas von dem Auflageteller 109 abgehoben, so daß der Plattenandrücker 39 die Platte freigibt. Das im Plattenandrücker 39 wirkende Andrückstück 139 wirkt aber weiterhin auf die Oberfläche der Kugel 145, so daß die äußeren Klemmbügelschenkel 125 nach außen gespreizt bleiben und mit den Kanten 149 die Informationsträgerplatte 11 festhalten. Da der Andrückkontakt zwischen dem Andrückstück 139 und der Kugel 145 im wesentlichen nur punktförmig erfolgt, ist die verbliebene Reibung zwischen dem Andrückstück 139 und der Zentriervorrichtung 120 bzw. dem Auflageteller 109 außerordentlich gering. Die Kugel 145 kann in einer alternativen Ausführungsform auch durch eine angespritzte Kugelfläche ersetzt werden.

## Patentansprüche

1. Plattenspieler für eine starre Informationsträgerplatte (11) mit einer Plattenhalterung, worauf während der Informationsübertragung die Informationsträgerplatte umläuft, wobei die Plattenhalterung einen Auflageteller (9) und eine Zentriervorrichtung (17) umfaßt, die eine Anzahl in einem Kreis angeordneter Zentrierelemente (21) umfaßt, die in radialer Richtung federnd beweglich sind, damit die Platte beim Umlaufen durch die gegen die Wand des Mittenloches (35) in der Platte federnden Zentrierelemente zentriert gehalten wird, wobei der Plattenspieler einen zwischen einer geöffneten und einer geschlossenen Lage beweglichen Deckel (37) aufweist, der einen Plattenandrücker (39) trägt, wobei die Platte beim Bewegen des Deckels in die geschlossene Lage mittels des Plattenandrückers federnd auf die Zentriervorrichtung und den Auflageteller gedrückt wird, dadurch gekennzeichnet, daß der Deckel in zwei Stufen aus der geöffneten Lage in die geschlossene Lage bewegbar ist, wobei der Deckel mit Hebemitteln (73) gekuppelt ist, die, nachdem in einer ersten Stufe, der Andrückstufe des Deckels der Plattenandrücker die Platte federnd auf die Zentriervorrichtung und den Auflageteller gedrückt hat, in einer zweiten Stufe, der Hebestufe, den Deckel anheben, bis der Plattenandrücker wieder von der auf der Zentriervorrichtung festgeklemmten Informationsträgerplatte freiliegt, wobei die nach außen federnden Zentrierelemente durch eine radiale Federung die Platte auf dem Auflageteller zentriert halten.

2. Plattenspieler nach Anspruch 1, dadurch gekennzeichnet, daß die Zentrierelemente (21) als aufrechtstehende, U-förmige Bügel ausgebildet sind, deren innere Schenkel (23) miteinander verbunden sind und deren äußere Schenkel (25) nach außen federn.

3. Plattenspieler nach Anspruch 2, dadurch gekennzeichnet, daß die inneren Schenkel des Zentrierelementes in eine Zentrierhülse (121) übergehen, die über einen Innenrand des Auflagetellers geschoben ist, daß die U-förmigen Bügel über einen Außenrand des Auflagetellers geschoben sind, der auf seiner Außenwand einen ringförmigen Vorsprung (117) aufweist, daß die Zentriervorrichtung auf den Außenrand und den ringförmigen Vorsprung gegen eine Federkraft aufschiebbar ist, daß beim Aufschieben der Zentriervorrichtung auf den Außenrand die äußeren Schenkel des Zentrierelementes vom ringförmigen Vorsprung radial nach außen gespreizt werden.

4. Plattenspieler nach einem der vorstehenden Ansprüche, dadurch gekennzeichnet, daß der Plattenandrücker (39) ringförmig ausgebildet ist und innerhalb des Plattenandrückers ein Andruckstück (139) vorhanden ist, das unabhängig federnd an dem Deckel angeordnet ist, das im Betrieb auf die Zentriervorrichtung drückt und die Zentrierelemente in radialer Richtung nach außen gegen die Wand des Mittenloches in der Platte drückt.

5. Plattenspieler nach Anspruch 4, dadurch gekennzeichnet, daß ein Spreizglied vorgesehen ist, das zentral an der im Bereich des Deckels liegenden Vorderseite der Zentriervorrichtung eine Kugelfläche bildet, gegen die im Betrieb das Andrückstück drückt.

6. Vorrichtung nach Anspruch 5, dadurch gekennzeichnet, daß die Kugelfläche von einer in der Oberseite der Zentriervorrichtung eingelassenen Kugel (145) gebildet ist.

## Claims

1. A disc player for a rigid information-carrying disc (11), which player comprises a disc holder on which the information-carrying disc rotates during information transfer and which comprises a turntable (9) and a centring device (17) which comprises a plurality of centring elements (21) which are arranged along a circle and which can each deflect resiliently in a radial direction so that the centring elements, which act on the wall of the centre hole (35) in the disc, keep the disc centred during its rotation, the player further comprising a lid (37) which is movable between an open and a closed position and which carries a disc loader (39), the disc being resiliently urged onto the centring device and the turntable by means of the disc loader when the lid is moved to the closed position, characterized in that the lid is movable from the open position to the closed position in two stages and is coupled to lifting means (73) which, after the disc loader has resiliently urged the disc onto the centring device and the turntable in a first stage of the closing movement of the lid, lift the lid in a second stage, or lifting stage, until the disc loader is again clear of the information carrying disc which is clamped onto the centring device, the disc being kept in a centred position on the turntable by a radially outward deflection of the resilient centring elements.

2. A disc player as claimed in claim 1, characterized in that the centring elements (21) are constructed as U-shaped members, whose inner limbs (23) are connected to each other and whose outer limbs (25) deflect resiliently outwards.

3. A disc player as claimed in claim 2, characterized in that the inner limbs of the centring elements are connected to a centring sleeve (121) which is slid on an inner rim on the turntable, the U-shaped members are slid on a outer rim on the turntable which has an annular projection (117) on the outer wall, the centring device can be slid onto the outer rim and the annular projection against spring force, and the outer limbs of the centring element are urged radially outwards by the annular projection when the centring device is slid onto the outer rim.

4. A disc player as claimed in any of the preceding claims, characterized in that the disc loader (39) is annular and a thrust member (139) is arranged inside the disc loader, which member is independently spring-mounted on the lid and during operation acts on the centring device, urging the centring elements radially outwards against the wall of the centre hole in the disc.

5. A disc player as claimed in claim 4, characterized in that there is provided an expansion member in the form a central spherical surface on the front side of the centring device near the lid, the thrust member acting on said spherical surface during operation.

6. A disc player as claimed in claim 5, characterized in that the spherical surface is formed by a ball (145) arranged in the upper surface of the centring device.

**Revendications**

1. Tourne-disque pour un support d'informations sous forme d'un disque rigide (11) présentant un support de disque sur lequel tourne le disque support d'informations pendant la transmission d'informations, le support de disque comprenant un plateau d'appui (9) et un dispositif de centrage (17), comportant un nombre déterminé d'éléments de centrage (21) prévus suivant un cercle, qui sont formés de façon élastique dans la direction radiale, pour que, lors de la rotation, le disque soit maintenu centré par les éléments de centrage élastiques s'appliquant contre la paroi du trou central (35) du disque, le tourne-disque présentant un couvercle (37) qui est mobile entre une position d'ouverture et une position de fermeture et qui supporte un dispositif de serrage de disque (39), le disque étant appliqué de façon élastique sur le dispositif de centrage et le plateau d'appui dans la position de fermeture à l'aide dudit dispositif de serrage de disque lors du déplacement du couvercle, caractérisé en ce que le couvercle peut être déplacé en deux étapes à partir de la position ouverte dans la position fermée, le couvercle est accouplé à des moyens de soulèvement (73) qui, après que dans une première étape — l'étape d'application du couvercle — le dispositif de serrage de plaque a appliqué le disque de façon élastique sur le dispositif de centrage et sur le plateau d'appui, dans une deuxième étape — l'étape de soulèvement — soulève le couvercle à nouveau jusqu'à ce que le dispositif de serrage de disque soit enlevé à nouveau du disque support d'informations serré sur le dispositif de centrage, les éléments de centrage élastiques s'appliquant élastiquement vers l'extérieur maintiennent par une élasticité raidale le disque sur le plateau d'appui.

2. Tourne-disque selon la revendication 1, caractérisé en ce que les éléments de centrage (21) sont constitués par des étriers relevés en forme de U, dont des bras intérieurs (23) sont reliés entre eux et dont les bras extérieurs (25) s'écartent élastiquement.

3. Tourne-disque selon la revendication 2, caractérisé en ce que les bras intérieurs des éléments de centrage se raccordent à une douille de centrage (21), qui est glissée sur un bord intérieur du plateau d'appui et présente, à sa paroi extérieure, une saillie annulaire, que le dispositif de centrage peut être glissé sur le bord extérieur et que la saillie annulaire peut être glissé à l'encontre de l'élasticité, que, lors du glissement du dispositif de centrage sur le bord extérieur, les bras extérieurs de l'élément de centrage sont écartés radialement vers l'extérieur par la saillie annulaire.

4. Tourne-disque selon l'une des revendications précédentes, caractérisé en ce que le dispositif de serrage de disque (39) est sous forme annulaire et à l'intérieur du dispositif de serrage de disque est prévue une pièce de pression (139), qui est prévue au couvercle d'une façon indépendamment élastique et qui exerce une pression sur le dispositif de centrage pendant le fonctionnement et applique les éléments de centrage dans la direction radiale vers l'extérieur contre la paroi du trou central dans le disque.

5. Tourne-disque selon la revendication 4, caractérisé par la présence d'un membre d'écartement constituant une face sphérique au centre de la face avant du dispositif de centrage située dans la zone du couvercle, face sphérique contre laquelle s'applique la pièce de pression, lors du fontionnement.

6. Dispositif selon la revendication 5, caractérisé en ce que la face sphérique est formée par une boule appliquée dans la face supérieure du dispositif de centrage.

0 090 458

FIG.1

FIG.2

FIG.3

FIG.4

FIG.5

FIG.6

FIG. 7